## Europäisches Patentamt

## European Patent Office

## Office européen des brevets

(19)

(11) Veröffentlichungsnummer: **0 254 975 B1**

(12) **EUROPÄISCHE PATENTSCHRIFT**

(45) Veröffentlichungstag der Patentschrift: **06.03.91**

(51) Int. Cl.5: **B29B 17/00**

(21) Anmeldenummer: **87110276.0**

(22) Anmeldetag: **16.07.87**

(54) **Verfahren und Vorrichtung zur Volumenreduzierung von formstabilen, entleerten Behältern aus thermoplastischem Kunststoff.**

(30) Priorität: **26.07.86 DE 3625380**

(43) Veröffentlichungstag der Anmeldung:
**03.02.88 Patentblatt 88/05**

(45) Bekanntmachung des Hinweises auf die
Patenterteilung:
**06.03.91 Patentblatt 91/10**

(84) Benannte Vertragsstaaten:
**AT CH DE ES FR LI NL**

(56) Entgegenhaltungen:
**DE-B- 2 059 643**

(73) Patentinhaber: **carstens-handelsgesellschaft mbH**
**Wiesingerweg 34**
**W-2000 Hamburg 20(DE)**

(72) Erfinder: **Reyers, Niels**
**Quellenweg 41**
**W-2359 Henstedt-Ulzburg(DE)**

(74) Vertreter: **UEXKÜLL & STOLBERG Patentanwälte**
**Beselerstrasse 4**
**W-2000 Hamburg 52(DE)**

## Beschreibung

Die Erfindung bezieht sich auf ein Verfahren und eine Vorrichtung zur Volumenreduzierung von formstabilen, entleerten Behältern aus thermoplastischem Kunststoff, die für chemische Flüssigkeiten, insbesondere Schmieröle benutzt worden sind, bei dem Behälter in einen im wesentlichen geschlossenen Aufnahmebehälter eingebracht und in diesem durch eine sich mindestens auf der Erweichungstemperatur des Kunststoffs befindende Luftströmung erwärmt werden.

Bei einem bekannten Verfahren dieser Art (DE-B-2 059 643) wird ein Behälter aus thermoplastischem Kunststoff in den Innenraum eines geschlossenen Aufnahmebehälters eingebracht und durch Erhitzen erweicht. Dabei erfolgt die Wärmezufuhr entweder durch Erwärmen der Seitenwände des Aufnahmebehälters oder durch Zufuhr von Warmluft durch einen Rost, auf dem der zu erweichende Behälter ruht. In jedem Fall befinden sich dann also entweder die Seitenwände oder der Rost auf der Erweichungstemperatur des Kunststoffs des Behälters oder sogar auf einer etwas höheren Temperatur, was zur Folge hat, daß der während des Erweichungsvorganges seine Form ändernde Behälter entweder in Berührung mit den erwärmten Seitenwänden des Aufnahmebehälters kommt und an diesen festklebt oder aber an dem durch die durchströmende Warmluft erhitzten Rost haftet.

Bei einem anderen Verfahren (DD-Z-225 099) erfolgt die Zufuhr der erwärmten Luft durch die Bodenwand und durch Seitenwände des Aufnahmebehälters, und der im Aufnahmebehälter befindliche Kunststoff wird lediglich auf eine Temperatur von 90°C bis 110°C erwärmt. Nach erfolgter Erwärmung wird dann ein Preßstempel im Aufnahmebehälter verfahren, so daß der erwärmte Kunststoff komprimiert wird.

Bei diesem bekannten Verfahren ist also sowohl eine Erwärmung als auch ein Preßvorgang erforderlich, und auf diese Weise kann keine optimale Volumenreduzierung der Kunststoffbehälter erreicht werden kann.

Es hat sich herausgestellt, daß es bei diesem bekannten Verfahren auch nicht möglich ist, die Volumenreduzierung dadurch zu verbessern, daß man die Temperatur des zugeführten Luftstroms erhöht, weil dann die Kunststoffbehälter an der Bodenwand und den Seitenwänden des Aufnahmebehälters festkleben und nur noch unter großen Schwierigkeiten zu entfernen sind.

Es ist ferner bereits bekannt (FR-A-2 2312 497), das Volumen eines einzelnen entleerten Behälters aus thermoplastischem Kunststoff dadurch zu verringern, daß man in den Behälter durch ein in ihn einzuführendes Rohr Warmluft einbläst, die zu einer Erweichung des Kunststoffs und damit zu einer Volumensreduzierung führt. Bei diesen bekannten Verfahren werden jedoch lediglich einzelne Behälter behandelt, die auf einer besonderen Halterung angeordnet werden, so daß sich der Rohrstutzen in sie hinein-erstreckt, während es nicht möglich ist, gleichzeitig das Volumen einer größeren Anzahl von Behältern zu verringern.

Schließlich ist es auch bereits bekannt (US-A-4 033 804), die Etiketten von Behältern aus thermoplastischem Kunststoff dadurch abzulösen, daß man die einzelnen Behälter durch Aufbringen von Warmluft erweicht, so daß sie schrumpfen und die Etiketten entfernt werden können. Auch hier erfolgt jedoch eine Behandlung einzelner Behälter.

Es ist Aufgabe der Erfindung, ein Verfahren zur Volumensreduzierung von formstabilen entleerten Behältern aus thermoplastischem Kunststoff zu schaffen, das sich einfach durchführen läßt und mit dem eine ausgeprägte Volumenreduzierung gleichzeitig für mehrere Behälter erreicht wird.

Zur Lösung dieser Aufgabe dient ein Verfahren zur Volumenreduzierung von formstabilen, entleerten Behältern aus thermoplastischem Kunststoff, die für chemische Flüssigkeiten, insbesondere Schmieröl benutzt worden sind, bei dem Kunststoffbehälter in einen im wesentlichen geschlossenen Aufnahmebehälter mit Einlegeboden eingebracht und in diesem durch eine sich mindestens auf der Erweichungstemperatur des Kunststoffes befindende Luftströmung erwärmt werden, welches dadurch gekennzeichnet ist, daß gleichzeitig mehrere Kunststoffbehälter auf den Einlegeboden gelegt und durch eine von oben zugeführte Luftströmung beaufschlagt werden, daß die Beaufschlagung der Kunststoffbehälter mit der nur im Innenraum des Aufnahmebehälters zirkulierenden Luft etwa 2 Stunden dauert und daß noch in den Kunststoffbehältern vorhandene Flüssigkeitsreste im Aufnahmebehälter aufgefangen und abgeleitet werden.

Überraschenderweise hat sich gezeigt, daß es mittels des erfindungsgemäßen Verfahrens möglich ist, trotz der sich ergebenden Erweichung der Kunststoffbehälter ein Ankleben der sich ergebenden Kunststoffmasse an den Wänden des Aufnahmebehälters zu vermeiden, da die Erwärmung der Kunststoffbehälter so erfolgt, daß die Wandbereiche des Aufnahmebehälters, die sich in unmittelbarer Berührung mit den Kunststoffbehältern befinden, auf einer Temperatur gehalten sind, die deutlich niedriger als diejenige der die Kunststoffbehälter beaufschlagenden Warmluft ist, da die Warmluft nicht durch diese Wände hindurch in den Innenraum des Aufnahmebehälters geleitet wird, sondern von oben auf die Behälter gebracht wird. Somit kann nach dem erfindungsgemäßen Verfahren eine erhebliche Volumenreduzierung der Kunststoffbehälter erreicht werden, indem diese so stark und so lange erwärmt werden, bis der Kunststoff erweicht und die Behälter in sich zusammenfallen, ohne daß die Gefahr des Anhaftens des entstehenden Kunststoffklumpens oder "Kunststoffkuchens" an der Bodenwand oder den Seitenwänden des Aufnahmebehälters besteht, wobei darüber hinaus die aus den zusammengefallenen Kunststoffbehältern austretenden Flüssigkeitsreste aufgefangen und separat abgeleitet werden.

Vorzugsweise wird bei dem erfindungsgemäßen Verfahren die Luft im oberen Bereich des Aufnahmebehälters erwärmt.

Die Erfindung betrifft ferner eine Vorrichtung zur Durchführung des erfindungsgemäßen Verfahrens, welche gekennzeichnet ist durch eine Einrichtung zur Erwärmung der Luft, durch einen im Deckel angeordneten Ventilator zum Zuleiten der erwärmten Luft zu den freien Oberflächenbereichen der Kunststoffbehälter im Innenraum des Aufnahmebehälters, und durch eine sich von dem am tiefsten liegenden Punkt des Bodens des Aufnahmebehälters durch eine der Seitenwände erstreckende Abflußrinne oder Abflußleitung.

An der Vorrichtung kann ein Thermostat zur Regelung der Temperatur vorgesehen sein, damit diese auf dem festgelegten Wert konstant gehalten wird, wobei dieser Wert zweckmäßigerweise oberhalb der Erweichungstemperatur des Kunststoffs liegt.

Die Erfindung wird im folgenden anhand eines in den Figuren dargestellten Ausführungsbeispiels näher erläutert.

Figur 1     zeigt die Vorderansicht eines Aufnahmebehälters.

Figur 2     zeigt die Rückansicht des Aufnahmebehälters aus Figur 1.

Figur 3     zeigt einen Schnitt durch den Aufnahmebehälter entlang der Linie I-I aus Figur 1.

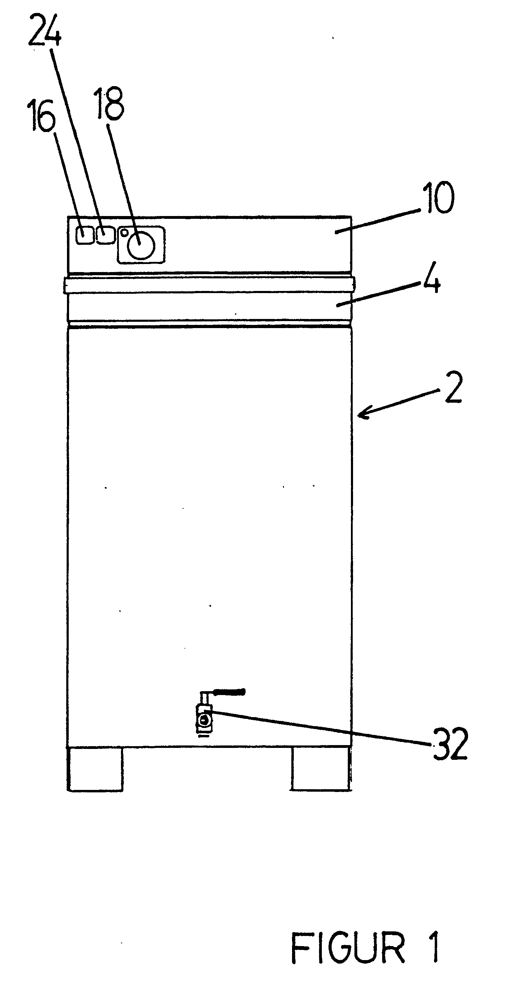

Der dargestellte Aufnahmebehälter 2 weist an seiner Oberseite einen Deckel 4 auf, der über Scharniere an der Rückseite des Aufnahmebehälters 2 angelenkt ist und in eine dichtende Schließstellung gebracht werden kann (Figur 1).

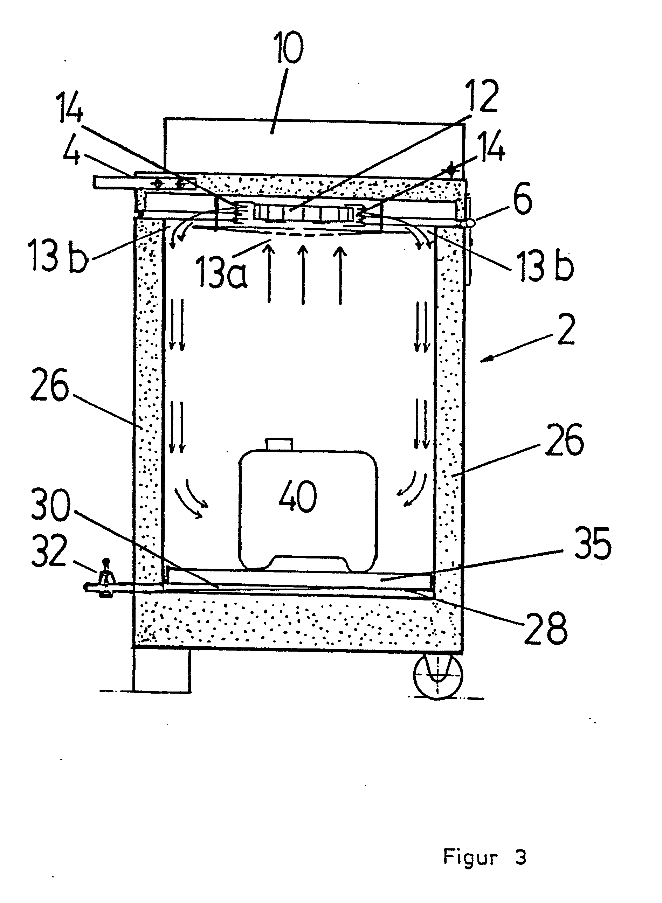

An der Oberseite des Deckels 4 befindet sich ein Armaturengehäuse 10, das mit dem Deckel 4 eine Baueinheit bildet. Wie Figur 3 zeigt, sind innerhalb des Deckels 4 ein Ventilator 12 und elektrische Heizschlangen 14 angeordnet. Ferner sind an der Innenseite des Deckels 4 in einem Abdeckblech mittlere Öffnungen 13a sowie seitliche Öffnungen 13b vorgesehen. Der Ventilator 12 sitzt mit seiner Ansaugseite direkt vor den mittleren Öffnungen 13a, so daß diese als Ansaugöffnung dienen. Angetrieben wird der Ventilator 12 von einem Elektromotor, der sich innerhalb des Armaturengehäuses 10 befindet und der seine elektrische Leistung über ein Anschlußkabel 11 erhält. Der Ventilator 12 wird über eine Zeitschaltuhr 18 an der Vorderseite des Armaturengehäuses 10 gesteuert, wobei ein ebenfalls an der Vorderseite des Armaturengehäuses 10 angebrachter Ein/Aus-Schalter 16 auch die Betriebsbereitschaft der Vorrichtung anzeigt.

Wie Figur 3 zu entnehmen ist, wird die vom Ventilator 12 durch die mittleren Öffnungen 13a angesaugte Luft zu beiden Seiten hin durch die seitlichen Öffnungen 13b, die auch von einem freien Ringraum gebildet sein können, wieder ausgeblasen. Um den Ventilator 12 liegen in Ausblasrichtung des Ventilators 12 die elektrischen Heizschlangen 14, durch die die angesaugte Luft erwärmt wird.

Zur Regelung der Temperatur der elektrischen Heizschlangen 14 ist im Armaturengehäuse 10 ein nicht dargestellter Thermostat und zur Anzeige des Betriebs des Thermostaten an der Außenseite des Armaturengehäuses 10 eine Signallampe 24 vorgesehen.

Die gesamte Vorrichtung wird über den Ein-/Aus-Schalter 16 ein- oder ausgeschaltet.

An der Außenseite des Aufnahmebehälters 2 ist eine Wärmeisolierung 26 vorhanden (Figur 3).

Auf dem Boden 28 des Aufnahmebehälters 2 liegt ein loser, herausnehmbarer Einlegeboden 35, auf dem die eingebrachten Kunststoffbehälter 40 ruhen.

Eine Abflußrinne 30 erstreckt sich vom am tiefsten liegenden Punkt des Bodens 28 des Aufnahmebehälters 2 durch die Vorderwand und weist an ihrem äußeren Ende einen Absperrhahn 32 auf. Das nach außen ragende Ende der Abflußrinne 30 und der Absperrhahn 32 liegen selbstverständlich nicht höher als der tiefste Punkt des Bodens 28 des Aufnahmebehälters 2, so daß gewährleistet ist, daß vorhandene Flüssigkeitsreste vom Einlegeboden 35 auf den Boden 28 des Aufnahmebehälters 2 fließen und dort gesammelt sowie durch die Abflußrinne 30 nach draußen geleitet werden.

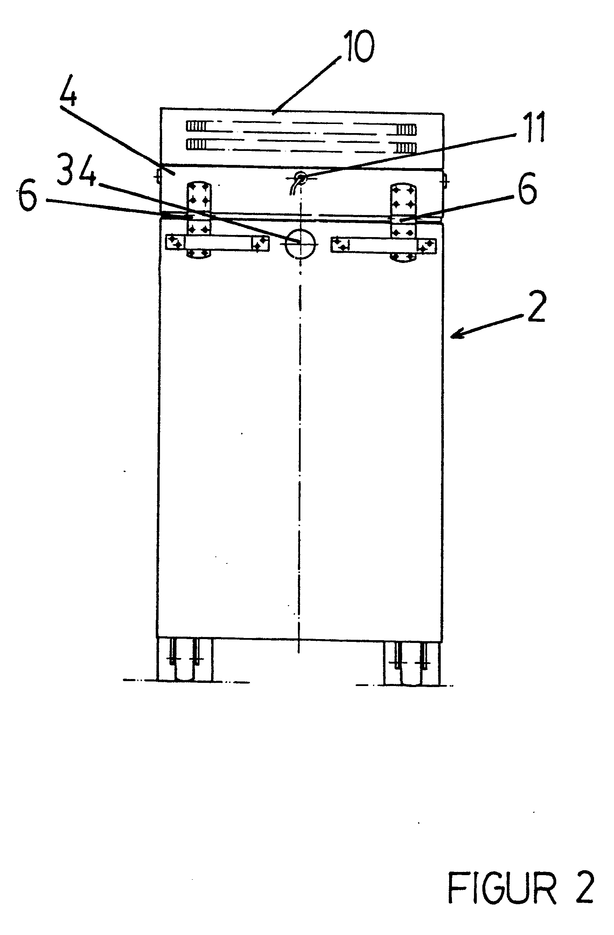

Im oberen Teil des Aufnahmebehälters 2 ist eine Öffnung 34 gebildet (Figur 2), durch die erwärmte Luft sowie bei der Wärmebehandlung der Kunststoffbehälter entstehende Gase austreten können.

Im Betrieb werden mehrere Kunststoffbehälter 40 (in Figur 3 nur einer dargestellt) in den Aufnahmebehälter 2 eingebracht, worauf der Deckel 4 geschlossen wird. Nach Aktivierung des Ventilators 12 und der elektrischen Heizschlangen 14 über den Ein-/Aus-Schalter 16 sowie der Zeitschaltuhr 18 wird die Luft im Innenraum des Aufnahmebehälters 2 vom Ventilator 12 durch die mittlere Öffnung 13a angesaugt und zur Erwärmung über die elektrischen Heizschlangen 14 geleitet. Dabei wird die Temperatur mindestens auf die Erweichungstemperatur des thermoplastischen Kunststoffes der zu behandelnden Kunststoffbehälter 40 gebracht, die üblicherweise 180°C beträgt. Die erwärmte Luft wird dann in Richtung auf den Boden 28 des Aufnahmebehälters 2 geblasen und damit in Berührung mit den freien Oberflächenbereichen der im Aufnahmebehälter 2 befindlichen Kunststoffbehälter 40 gebracht, so daß diese Oberflächenbereiche gleichmäßig erwärmt werden. Bei dieser Wärmebehandlung fallen die Behälter 40 innerhalb von zwei Stunden zusammen und bilden auf dem Einlegeboden 35 einen "Kunststoffkuchen", so daß dann die Wärmebehandlung beendet werden kann.

Die noch in den Kunststoffbehältern 40 vorhandenen Flüssigkeitsreste, die durch die Erwärmung besonders fließfähig geworden sind, sammeln sich unter dem Einlegeboden 35 an der tiefsten Stelle des Bodens 28 des Aufnahmebehälters 2 und gelangen von dort in die Abflußrinne 30, so daß sie durch Öffnen des Absperrhahns 32 entfernt werden können.

## Ansprüche

1. Verfahren zur Volumenreduzierung von formstabilen, entleerten Behältern (40) aus thermoplastischem Kunststoff, die für chemische Flüssigkeiten, insbesondere Schmieröl benutzt worden sind, bei dem Kunststoffbehälter (40) in einen im wesentlichen geschlossenen Aufnahmebehälter (2, 4) mit Einlegeboden (35) eingebracht und in diesem durch eine sich mindestens auf der Erweichungstemperatur des Kunststoffes befindende Luftströmung erwärmt werden, **dadurch gekenneichnet,** daß gleichzeitig mehrere Kunststoffbehälter (40) auf den Einlegeboden (35) gelegt und durch eine von oben zugeführte Luftströmung beaufschlagt werden, daß die Beaufschlagung der Kunststoffbehälter (40) mit der nur im Innenraum des Aufnahmebehälters (2, 4) zirkulierenden Luft etwa 2 Stunden dauert und daß noch in den Kunststoffbehältern (40) vorhandene Flüssigkeitsreste im Aufnahmebehälter (2, 4) aufgefangen und abgeleitet werden.

2. Verfahren nach Anspruch 1, **dadurch gekennzeichnet,** daß die Luft im oberen Bereich des Aufnahmebehälters (2, 4) erwärmt wird.

3. Vorrichtung zur Durchführung des Verfahrens gemäß Anspruch 1 oder 2, **gekennzeichnet** durch eine Einrichtung (14) zur Erwärmung der Luft, durch einen im Deckel (4) angeordneten Ventilator (12) zum Zuleiten der erwärmten Luft zu den freien Oberflächenbereichen der Kunststoffbehälter (40) im Innenraum des Aufnahmebehälters (2, 4) und durch eine sich von dem am tiefsten liegenden Punkt des Bodens

(28) des Aufnahmebehälters (2) durch eine der Seitenwände erstreckende Abflußrinne (30) oder Abflußleitung.

4. Vorrichtung nach Anspruch 3, **dadurch gekennzeichnet,** daß der Aufnahmebehälter (2) durch einen Deckel (4) verschließbar ist.

5. Vorrichtung nach Anspruch 4, **dadurch gekennzeichnet,** daß die Einrichtung zur Erwärmung der Luft aus elektrischen Heizschlangen (14) besteht, daß der Ventilator (12) und die elektrischen Heizschlangen (14) innerhalb des Deckelbereichs (4) angeordnet und an der Innenseite des Deckels (4) mittlere und seitliche Öffnungen (13a, 13b) vorgesehen sind, wobei die mittleren Öffnungen (13a) die Ansaugöffnungen des Ventilators (12) und die seitlichen Öffnungen (13b) die Ausblasöffnungen des Ventilators (12) sind, und daß die elektrischen Heizschlangen (14) in Ausblasrichtung des Ventilators (12) liegen.

6. Vorrichtung nach einem der Ansprüche 3 bis 5, **gekennzeichnet** durch eine Zeitschaltuhr (18) zur Einstellung der Erwärmungszeit.

7. Vorrichtung nach einem der Ansprüche 3 bis 6, **gekennzeichnet** durch einen Thermostaten zur Regelung der Temperatur.

8. Vorrichtung nach einem der Ansprüche 3 bis 7, **dadurch gekennzeichnet,** daß der Aufnahmebehälter (2, 4) eine Öffnung (34) zum Austritt von erwärmter Luft und von während der Wärmebehandlung der Kunststoffbehälter (40) entstehenden Gasen aufweist.

## Claims

1. A method for reducing the volume of inherently stable, empty containers (40) made from thermoplastic material, which have been used for chemical fluids, especially lubricating oil, with which plastic containers (40) are placed inside a substantially closed receptacle (2, 4) having a removable base (35) and are heated therein by a current of air which is at least at the softening temperature of the plastic, characterised in that several plastic containers (40) are simultaneously placed on the removable base (35) and are impinged by a current of air supplied from above, in that the impingement of the plastic containers (40) with the air circulating only inside the receptacle (2, 4) lasts for roughly 2 hours and in that any fluid still remaining in the plastic containers (40) is collected in the receptacle (2, 4) and discharged.

2. A method according to Claim 1,
characterised in that the air is heated in the upper region of the receptacle (2, 4).

3. An appliance for performing the method as specified by Claim 1 or 2,
characterised by a device (14) for heating the air, by a ventilator (12) disposed in the cover (4) for supplying the heated air to the free surface regions of the plastic containers (40) inside the receptacle (2, 4) and by a drainage trough (30) or drainage line extending from the lowest point of the base (28) of the receptacle (2) through one of the side walls.

4. An appliance according to Claim 3,
characterized in that the receptacle (2) can be closed by a cover (4).

5. An appliance according to Claim 4,
characterised in that the device for heating the air consists of electric heating coils (14), in that the ventilator (12) and the electric heating coils (14) are disposed inside the cover region (4) and central and lateral apertures (13a, 13b) are provided inside the cover (4), with the central apertures (13a) being the inlet ports of the ventilator (12) and the lateral apertures (13b) being the exhaust ports of the ventilator (12), and in that the electric heating coils (14) lie in the exhaust direction of the ventilator (12).

6. An appliance according to one of Claims 3 to 5,
characterised by a time switch (18) for setting the heating time.

7. An appliance according to one of Claims 3 to 5,
characterised by a thermostat for regulating the temperature.

8. An appliance according to one of Claims 3 to 7,
characterised in that the receptacle (2, 4) comprises an aperture (34) for the egress of heated air and of gases which have been produced during the heat treatment of the plastic containers (40).

**Revendications**

1. Procédé de compactage de récipients (40) en matière synthétique thermoplastique qui sont de forme stable et ont été vidés et qui sont utilisés pour des produits chimiques liquides en particulier des huiles de graissage, selon lequel les récipients (40) sont déposés dans un réceptacle (2, 4) pratiquement clos avec une sole de réception (35) et y sont réchauffés à l'aide d'un flux d'air qui y règne à au moins la température de ramollissement de la matière synthétique caractérisé en ce que plusieurs récipients (40) sont simultanément déposès sur la sole (35) et soumis à un flux d'air introduit par le haut, en ce que l'action sur les récipients (40) de l'air qui n'a circulé que dans l'enceinte du réceptacle (2, 4) dure environ deux heures et en ce que les résidus liquides encore présents dans les récipients (40) sont captés et dérivés dans le réceptacle (2, 4).

2. Procédé selon la revendication 1 caractérisé en ce que l'air est réchauffé dans la zone supérieure du réceptacle (2, 4).

3. Dispositif pour la mise en oeuvre du procédé selon la revendication 2 caractérisé par une installation (14) de réchauffage de l'air, par un ventilateur (12) placé dans un couvercle (4) pour envoyer l'air réchauffé sur la surface supérieure libre des récipients (40) dans l'enceinte du réceptacle (2, 4) et par un chenal (30) ou un conduit d'évacuation placé au point le plus bas du plancher et s'étendant au travers d'une paroi latérale.

4. Dispositif selon la revendication 3 caractérisé en ce que le réceptacle (2) est obsturable par un couvercle (4).

5. Dispositif selon la revendication 4 caractérisé en ce que l'installation de réchauffage de l'air consiste en un serpentin (14) le chauffage électrique, en ce que le ventilateur et le serpentin sont disposés à l'intérieur de l'emplacement du couvercle (4) et des orifices (13a, 13b) centraux et latéraux sont ménagés sur la face intérieure du couvercle (4) de manière que les orifices centraux (13a) servent d'entrées d'aspiration et les orifices latéraux (13b) servent de sorties de soufflage du ventilateur (12) et en ce que le serpentin (14) est placé sur la sortie du ventilateur (12).

6. Dispositif selon l'une des revendications 3 à 5 caractérisé par une minuterie (18) pour le réglage de la durée de chauffage.

7. Dispositif selon l'une des revendications 3 à 6 caractérisé par un thermostat pour le maintien de la température.

8. Dispositif selon l'une quelconque des revendications 3 à 7 caractérisé en ce que le réceptacle (2, 4) comprend un regard (34) pour l'évacuation de l'air réchauffé et des gaz engendrés par le chauffage des récipients (40).

FIGUR 1

FIGUR 2

Figur 3